# EUROPEAN PATENT SPECIFICATION

(11) **EP 1 844 133 B1**
(45) Date of publication and mention of the grant of the patent: **18.03.2009**
(21) Application number: 06706242.2
(22) Date of filing: 13.01.2006
(51) Int. Cl.: C11D 3/10, C11D 3/37, C11D 3/33, C01D 7/40, C01D 7/06

(54) **MODIFIED SODIUM CARBONATE CARRIER MATERIAL**
TRÄGERMASSE FÜR EIN MODIFIZIERTES NATRIUMCARBONAT
MATERIAU SUPPORT AU CARBONATE DE SODIUM MODIFIE

(30) Priority: 01.02.2005 GB 0502056
(43) Date of publication of application: 17.10.2007
(73) Proprietor: Unilever PLC, London EC4Y 0DY (GB); Unilever N.V., 3013 AL Rotterdam (NL)
(72) Inventor: CHAPPLE, ANDREW, P., UNILEVER R & D PORT SUNLIGHT, WIRRAL, MERSEYSIDE CH63 3JW (GB); CRAWFORD, ROBERT, J., UNILEVER R & D PORT SUNLIGHT, WIRRAL, MERSEYSIDE CH63 3JW (GB)
(74) Representative: Bristow, Stephen Robert
(86) International application number: PCT/EP2006/000320
(87) International publication number: WO 2006/081930

(56) References cited:
- EP-A- 0 221 776
- EP-A- 0 266 863
- EP-A- 0 289 311
- EP-A- 0 364 067
- EP-A- 0 887 316
- US-A- 4 900 466

## Description

This invention relates to modified sodium carbonate carrier material, a process for its manufacture; and to the use of the carrier materials, particularly in detergent formulations.

US 4 900 466 discloses that both sodium carbonate monohydrate and Burkeite may be converted to a more desirable crystal form in a slurry by the addition of a low level of a polycarboxylate material, not later than the relevant salts, and then drying the slurry. The maximum water content of the slurries used was 53.5%. This process could be utilised to form a detergent base, a whole detergent powder, or any intermediate product. Such powders are said to be capable of absorbing and retaining substantial quantities of liquid nonionic surfactants and other liquid organic detergent components.

The crystal growth modifiers used in US 4 900 466 are preferably homopolymers or copolymers of acrylic acid or maleic acid. Of especial interest are polyacrylates, acrylic acid/maleic acid copolymers, and acrylic phosphinates. Suitable polymeric crystal growth modifiers are said to include salts of polyacrylic acid, ethylene/maleic acid copolymers, methyl vinyl ether/maleic acid copolymers, acrylic acid/maleic acid copolymers, and acrylic phosphinates. These types of crystal growth modifier are not readily biodegradable. This is a problem for a material that may be used in a laundry washing process.

EP 1 306 424A also describes a process for modification of sodium carbonate. The material is said to be dried from a solution or a slurry. In the examples there is a particulate material present in the liquid before it is dried. In the examples the maximum water content of the slurry before drying is said to be 53%.

Further relevant documents are EP 0 221 776 A, EP 026683 A and EP 0 289 311 A. According to the invention there is provided a process comprising the steps of:
(i) preparing a solution of sodium carbonate, an effective amount of a crystal growth modifier which is selected from the group comprising polyacrylates, polyaspartates and polyaspartic acids; and optionally one or more anionic and/or nonionic detergent-active compounds, one or more detergency builders and/or one or more further heat-insensitive detergent components; whereby a slurry is not formed and whereby crystal growth-modified sodium carbonate is formed;
(ii) drying the solution to form a dry solid carrier material;
(iii) optionally incorporating into the dry solid carrier material one or more detergent components in liquid form and/or mixing the dried solid material with one or more solid detergent components.

The solution formed in step (i) advantageously has less than 35% solids to ensure that a slurry is not formed.

Preferably it has about 30% or less by weight dissolved solids.

The solution may be dried by any method, for example, spray drying, air drying, oven drying, drum drying, ring drying, freeze drying, solvent drying or microwave drying.

The process may be used to produce a predominantly inorganic base material produced by steps (i) and (ii) of the process, from an aqueous solution consisting essentially of water, the crystal growth modifier, sodium carbonate and if present, sodium sulphate. This granular product is useful either as the principal carrier material in a detergent composition or as a carrier material for one particular ingredient. The granular products of the process may also contain surfactants and other components commonly encountered in detergent compositions, incorporated before drying, or postdosed, or both, as appropriate.

According to a second aspect of the invention there is provided a solid material of high liquid carrying capacity, the solid material comprising crystal growth modified sodium carbonate wherein the solid material further comprises a polymeric crystal growth modifier selected from polyaspartic acids and polyaspartates.

The preferred polymeric crystal growth modifiers have a molecular weight of at least 1000, advantageously from 3500 to 300000, especially from 4000 to 250000. Solid materials having especially good carrying capacities may be prepared using polyaspartate crystal growth modifiers having molecular weights in the 3500 to 100000 range, especially 4000 to 70000 and more especially 5000 to 70000. All molecular weights quoted herein are those provided by the manufacturers.

Polyaspartate is a biopolymer synthesised from L-aspartic acid, a natural amino acid. Due in part to the carboxylate groups, polyaspartate has similar properties to polyacrylates. One preferred type of polyaspartate is thermal polyaspartate or TPA. This has the benefit of being biodegradable to environmentally benign products, such as carbon dioxide and water, which avoids the need for removal of TPA during sewage treatment, and its disposal to landfill.

TPA may be made by first heating aspartic acid to temperatures above 180°C to produce polysuccinimide. Then the polysuccinimide is ring opened to form polyaspartate. Because the ring can open in two possible ways, two polymer linkages are observed, an α-linkage and a β-linkage.

Amounts of from 0.1 to 20% by weight of the crystal growth modifier, preferably from 0.2 to 5% by weight, based on the total amount of sodium carbonate and, if present, sodium sulphate, are generally sufficient to provide the improved carrying capacity, especially when used in the process of the invention.

For environmental reasons, the preferred crystal growth modifier is polyaspartate.

Dried crystal-growth-modified sodium carbonates made by the process of the invention display good flow properties, and resistance to caking. These materials may thus be used as bases for detergent powders in which all components are incorporated in solution before it is dried. Their main advantage, however, lies in their capacity to take up and hold large quantities of liquid components, so their use is of particular benefit as a carrier material in compositions which include an ingredient that is postdosed (i.e. introduced after drying) in liquid form. That ingredient may be inherently liquid at processing temperatures, or it may first be liquefied by melting or dissolving in a solvent. Examples of such ingredients are perfumes, oils, and aqueous solutions; but the invention is of particular interest concerning nonionic surfactants and aqueous pastes of anionic surfactants, such as sodium lauryl ether sulphate (SLES).

Nonionic surfactants preferably used in the process and compositions of the invention are the primary and secondary alcohol ethoxylates, especially the C₁₂ -C₁₅ primary and secondary alcohols ethoxylated with an average of from 3 to 20 moles of ethylene oxide per mole of alcohol. The use of the carrier material of the invention is especially advantageous for nonionic surfactants having an average degree of ethoxylation of 10 or below, which are generally liquid at room temperature and often cannot be spray-dried because they give rise to unacceptable levels of tower emission ("blue smoke" or "pluming") An average degree of ethoxylation in the range 3 to 9 is most preferred.

The crystal-growth-modified sodium carbonate of the invention provides an excellent means for incorporating liquid nonionic surfactants into detergents powders. A dried base is first prepared (steps (i) and (ii) of the process of the invention) and the nonionic surfactant is then added in step (iii) of the process of the invention. The addition can, for example, be achieved by spraying on of the nonionic surfactant, or by admixture or granulation in a high shear mixer.

This process can be utilised in various ways in a detergent composition. The dried base powder or carrier prepared in step (ii) may incorporate any other heat-insensitive components, for example, anionic surfactants or builders, that are to be included in the product. In this case, admixture with other solid components is optional, and may be omitted altogether, for example, in a powder containing no bleaching components or enzymes.

Alternatively, the dried base powder of step (ii) may be a predominantly inorganic carrier intended specially as a vehicle for the nonionic surfactant or anionic surfactant, and may perhaps form only a minor part of the final product. In step (iii) it will then be mixed with the main product, which might itself have been dried in a separate operation.

Various intermediate options are also possible.

The total level of sodium carbonate and (if present) sodium sulphate in a final product according to the invention may vary between wide limits. In products where the modified salt is the principal carrier in the composition, the level is preferably at least 15% by weight and more preferably at least 20% by weight, but much lower levels may be encountered when the crystal-growth-modified material is used only as a carrier for a minor ingredient. The level of carrier used may provide non-ionic levels of over 1%, advantageously up to 15% in a detergent formulation.

The amount of crystal-growth-modifying polymer in such products may be higher than the level required for effective crystal growth modification, because the polymer may also fulfil other functions, such as structuring, in a detergent powder. This is especially likely in compositions containing only low levels of the relevant salts (sodium carbonate, sodium sulphate) based on the final product.

When the carrier is used in detergent compositions in accordance with the present invention the compositions may contain any ingredients conventionally present, notably anionic surfactants, both soap and synthetic; nonionic surfactants, as already discussed; detergency builders; alkali metal silicates; antiredeposition agents; antiincrustation agents; fluorescers; enzymes; bleaches, bleach precursors and bleach stabilisers; perfumes; and dyes.

Anionic surfactants are well known to those skilled in the detergents arts. Examples include alkylbenzene sulphonates, particularly sodium alkylbenzene sulphonates having an average chain length of C₁₂; primary and secondary alcohol sulphates, particularly sodium C₁₂-C₁₅ primary alcohol sulphates; olefin sulphonates; alkane sulphonates; and fatty acid ester sulphonates.

It may also be desirable to include one or more soaps of fatty acids. The soaps that can be used are preferably sodium soaps derived from naturally occurring fatty acids, for example the fatty acids from coconut oil, beef tallow, or sunflower oil.

The sodium carbonate present in the detergent composition acts as a detergency builder, but it may nevertheless be advantageous to include other builders. Phosphate builders, notably alkali metal tripolyphosphates, orthophosphates and pyrophosphates, may be present, but the invention is of especial applicability to zero-phosphorous compositions. Non-P builders that may be present include, but are not restricted to, crystalline and amorphous aluminosilicates, layered silicates, soaps, sulphonated fatty acid salts, citrates, nitrilotriacetates and carboxymethyloxysuccinates; it is within the scope of the invention for the amount of such other builders to exceed the amount of sodium carbonate present. Calcite or other crystallisation seeds may be included to increase the builder efficiency of the sodium carbonate.

The foregoing description has been concerned primarily with detergent compositions suitable for washing fabrics. Compositions in accordance with the invention may also find use, for example, in laundry pre-treatment products, household cleaning products and personal products (toiletries), pesticides, pharmaceutical products, agricultural products and industrial products. In all fields of use, the product may simply consist of the predominantly inorganic carrier material having a liquid or liquifiable material sorbed thereon, or other materials may be incorporated via the liquid, by postdosing, or both; and the dried predominantly inorganic carrier material characteristic of the invention may form a major or minor part of the product.

One highly preferred field of use for the inorganic carrier material of the invention is in fabric washing detergent powders. This preferred class of compositions according to the invention falls into two subclasses: powders in which the inorganic carrier material of the invention is the principle base or matrix material and is present at a substantial level; and powders in which the predominantly inorganic carrier material is used in an "adjunct", that is to say, it is used as a carrier material for a particular ingredient, such as a liquid nonionic surfactant, and the adjunct is postdosed to a base powder of a different type. In the second case, the inorganic carrier material of the invention may be present at a relatively low level. For example at a level of 1 to 7% or even lower if, for instance, perfume is sorbed onto the carrier.

Examples of detergent compositions utilising the inorganic carrier material of the invention as the principal base or matrix of the powder include the following:

### (i) Zero-P carbonate-built powders

A detergent powder intended as a very low-sudsing product for washing machine use may typically contain nonionic surfactant only, at a level of 5 to 30% by weight. A medium-sudsing product suitable for use in top-loading washing machines may typically contain a binary surfactant system (anionic/nonionic) at a level of 5 to 40% by weight. A product intended for hand washing may contain a relatively high level of anionic surfactant alone (10-40%).

### (ii) Low or zero-P aluminosilicate-built powders

Examples of detergent compositions utilising the inorganic carrier material of the invention in an adjunct include the following:

### (iii) Phosphate-built powders

The modified sodium carbonate will typically be used as a carrier for nonionic surfactant. An adjunct may, for example, be prepared by spraying liquid or liquefied nonionic surfactant onto a dried carrier material according to the invention, and the adjunct is then postdosed to a base powder containing anionic surfactant, possibly nonionic surfactant, phosphate builder, sodium silicate and other heat-sensitive ingredients, prepared in a separate drying operation. The adjunct may, for example, contain from 5 to 40% by weight of nonionic surfactant and from 60 to 95% by weight of crystal-growth-modified inorganic salts. The adjunct may, for example, constitute from 3 to 50% by weight of the final powder.

The adjunct carrier of the invention may also be used to introduce liquid ingredients other than nonionic surfactants into the composition. The anionic surfactant SLES is of particular interest in that regard.

### (iv) Low or zero-P aluminosilicate-built powders

The invention will now be further described with reference to the following non-limiting examples:

### Example 1

50 g of anhydrous sodium carbonate was dissolved in 150 ml of demineralised water into which had previously been dissolved 1 g of sodium polyaspartate (molecular weight 50000). The resulting solution was then dried in petri dishes in an oven at 80°C. When dry, the solid material was removed from the dishes and lightly ground using a pestle and mortar.

The process of example 1 was repeated with other types and varying amounts of sodium aspartate. The details are given in Table 1. Comparative example A contained no aspartate.

**Table 1**

| Example No. | Sodium aspartate (g) | Sodium aspartate (%) | Mwt of aspartate |
|---|---|---|---|
| 1 | 1 | 2 | 50000 |
| 2 | 1 | 2 | 6000 |
| 3 | 1 | 2 | 3000 |
| 4 | 2.5 | 5 | 50000 |
| 5 | 0.5 | 1 | 50000 |
| 6 | 0.25 | 0.5 | 50000 |
| 7 | 0.125 | 0.25 | 50000 |
| A | 0 | 0 | - |

### Examples 8 to 14 and Comparative Example B

20 g of the dried, solid material from each of examples 1 to 7 and comparative example A was placed in a laboratory-scale granulator (Braun MR 500 CA) and granulated with coco 6.5EO nonionic surfactant. The weight of nonionic required to achieve granulation was noted.

For comparative Example C, 20 g of commercial grade light soda ash was used in place of the dried solid material from an earlier example. The effect of molecular weight and amount of aspartate on carrying capacity is shown in tables 2 and 3.

**Table 2 - Effect of Molecular Weight (at 2% polyaspartate)**

| Example | Example forming solid material | Molecular weight of poly aspartate | Wt Nonionic added | % Nonionic relative to dry solid material |
|---|---|---|---|---|
| C | N/A | 0 | 5.7 | 28.5 |
| B | A | 0 | 3.3 | 16.5 |
| 8 | 1 | 50,000 | 11.9 | 59.5 |
| 9 | 2 | 6,000 | 9.7 | 48.5 |
| 10 | 3 | 3,000 | 3.1 | 15.5 |

**Table 3 - Effect of amount of aspartate**

| Example | Example forming solid material | % Poly aspartate | Wt Nonionic added | % Nonionic relative to dry solid material |
|---|---|---|---|---|
| C | N/A | 0 | 5.7 | 28.5 |
| B | A | 0 | 3.3 | 16.5 |
| 8 | 1 | 2 | 11.9 | 59.5 |
| 11 | 4 | 5 | 11.4 | 57 |
| 12 | 5 | 1 | 11.5 | 57.5 |
| 13 | 6 | 0.5 | 8.2 | 41 |
| 14 | 7 | 0.25 | 6.8 | 34 |

### Example 15 and Comparative Example D

In example D, 25 g of light soda ash was placed in a laboratory-scale granulator (Braun MR 500 CA) and granulated with SLES paste (MANRO BES70).

For example 15, 25 g of the dried, solid material from example 1 was granulated with SLES paste in the same way as for example D. In each case the weight of SLES paste required to achieve granulation was noted.

**Table 4**

| Example | wt SLES paste added | %SLES paste % relative to dry solid material |
|---|---|---|
| D | 12.9 | 51.7 |
| 15 | 19.3 | 75.8 |

### Example 16 and Comparative Example E

These examples show the benefit for carbonate/sulphate mixture systems.

For example 16, 10.6 g Na₂CO₃ was dissolved in 40 ml demineralised water. 28.4 g Na₂SO₄ was dissolved in another 160 ml demineralised water into which was also dissolved 1.6 g of a sodium polyaspartate solution (50% solids, molecular weight 50,000). The two solutions were then mixed and the resultant mixture dried in petri dishes at 85°C in an oven

30 g of the dried solid material was granulated with nonionic surfactant (coco 7EO) in a small granulator (Braun MR500CA). The weight of nonionic required to achieve granulation was recorded as 8.4 g.

For comparative Example E, 10.6 g Na₂CO₃ was dissolved in 40 ml demineralised water. 28.4 g Na₂SO₄ was dissolved in another 160 ml demineralised water. The two solutions were then mixed and the resultant mixture dried in petri dishes at 85°C in an oven. 30 g of the dried solid material was granulated with coco 7EO nonionic surfactant in a Braun MR500CA granulator. The weight of nonionic required to achieve granulation was recorded as 3.0 g.

Solid material from Example 16 clearly has higher surfactant carrying capacity than solid material from Comparative Example E.

### Examples 17 and 18 and Comparative Examples F, G, H, J and C

To show the effect on carrying capacity of a process using a solution in preference to a slurry a series of tests were run going from dilute solution, through concentrated solution to slurry and to paste. The carrying capacity was also compared with 100% commercial grade light soda ash (Comparative example C), and with sodium carbonate produced from solution in the absence of polycarboxylate polymer.

Anhydrous sodium carbonate, polycarboxylate solution (30g/l Sokolan CP5, on a dry basis), and water were mixed in the proportions listed in table 5. The resulting solutions/slurries/pastes were then dried in an oven at. 80°C.

20 g of the resulting dried, solid material from each of examples 17 and 18 and comparative examples F, G, H and J was placed in a laboratory-scale Braun MR 500 CA granulator and granulated with coco6.5EO nonionic surfactant. For comparative Example C, 20 g of commercial grade light soda ash was used.

The weight of nonionic required to achieve granulation was noted for each example.

These examples clearly show that the optimum nonionic carrying capacity is obtained from drying of solutions. They also clearly show that these benefits are only obtained in the presence of a crystal habit modifying polymer. It should be noted that the water level in the solutions is in excess of 60%.

**Table 5 - effect of solution concentration**

| Example | Weight of sodium carbonate (g) | poly carboxylate soln (ml) | water (ml) | appearance | wt NI/wt solid % |
|---|---|---|---|---|---|
| 17 | 20 | 13.3 | 66.7 | solution | 60 |
| 18 | 30 | 20 | 50 | solution | 55.2 |
| F | 40 | 26.7 | 33.3 | dilute slurry | 50.9 |
| G | 50 | 33.3 | 16.7 | slurry | 44.7 |
| H | 60 | 40 | 0 | paste | 37.6 |
| J | 30 | 0 | 70 | solution | 16.5 |
| C | 100 | 0 | 0 | light ash | 28.5 |

### Example 19

50 g of anhydrous sodium carbonate was dissolved in 150 ml of demineralised water into which had previously been dissolved 1 g of sodium polyaspartate (molecular weight 50000). To this was added 5g of coco 6.5EO nonionic. The resulting solution was then dried in petri dishes in an oven at 80°C. When dry, the solid was removed from the dishes and lightly ground using a pestle and mortar. The nominal composition of this solid material was 90.9% sodium carbonate and 9.1% nonionic.

### Example 20

22 g of the dried, solid material from example 19 was placed in a laboratory-scale granulator (Braun MR 500 CA) and granulated with coco6.5EO nonionic surfactant. The weight of additional nonionic required to achieve granulation was measured as 8.1g.

The total nonionic content of the resulting granules was therefore 10.1g. The weight of nonionic relative to dry sodium carbonate solid material in the granule was 50.5%.

## Claims

1. A process for preparing a modified sodium carbonate carrier material, the process comprising the steps of:
(i) preparing an aqueous solution of sodium carbonate; an effective amount of a crystal growth modifier selected from the group comprising polyacrylates, polyaspartates and polyaspartic acids; and optionally one or more anionic and/or nonionic detergent-active compounds, one or more detergency builders and/or one or more further heat-insensitive detergent components; whereby in slurry is not formed and whereby crystal growth-modified sodium carbonate is formed;
(ii) drying the solution to form a dry solid carrier material;
(iii) optionally incorporating into the dried solid carrier material one or more detergent components in liquid form and/or mixing the dried solid material with one or more solid detergent components.

2. A process according to claim 1 wherein the solution is a concentrated solution with less than 35% solids.

3. A modified sodium carbonate carrier material comprising:
a) dry inorganic solids consisting of habit modified sodium carbonate; and
b) polyaspartic acid, or a sodium salt of polyaspartic acid,
wherein the weight ratio of polyaspartic acid to the dry inorganic solids is in the ratio from 0.5:100 to 10:100.

4. A carrier material as claimed in claim 3 in which the ratio is from 1:100 to 5:100.

5. A carrier material as claimed in claim 3 or claim 4 in which the ratio is from 1:100 to 3:100.

6. A carrier material as claimed in any one of claims 3 to 5 in which the molecular weight of the polyaspartic acid is greater than 4,000.

7. A carrier material as claimed in any one of claims 3 to 6 which is substantially free from sodium sulphate.

8. A loaded carrier comprising a carrier material as claimed in any one of claims 3 to 7 in which there is adsorbed from 5 to 40 wt% of a liquid.

9. A carrier material as claimed in any one of claims 3 to 7 made according to the process of claim 1 or claim 2.

10. A loaded carrier as claimed in claim 8 in which the liquid is non-ionic surfactant or anionic surfactant paste.

11. Use of the loaded carrier according to claim 10 in a laundry detergent formulation.

12. Use according to claim 11 in which the laundry detergent formulation is a powder composition.

13. Use according to claim 11 in which the laundry detergent formulation is a tablet.

## Patentansprüche

1. Verfahren zur Herstellung einer modifizierten Natriumcarbonat-Trägermasse, wobei dieses Verfahren die Schritte umfasst:
(i) Herstellung einer wässrigen Lösung von Natriumcarbonat, einer wirksamen Menge eines Kristallwachstum-Modifizierers, ausgewählt aus der Gruppe, die umfasst Polyacrylate, Polyaspartate und Polyasparaginsäuren und wahlweise ein oder mehrere anionische und/oder nichtionische detergensaktive Verbindungen, ein oder mehrere Detergens-Builder und/oder ein oder mehrere weitere hitzeunempfindliche Detergens-Komponenten, wobei eine Ausschlämmung gebildet und ein durch Kristallwachstum modifiziertes Natriumcarbonat gebildet wird;
(ii) Trocknen der Lösung, um eine trockene feste Trägermasse zu bilden;
(iii) gegebenenfalls Einbinden von ein oder mehreren Detergens-Komponenten in flüssiger Form in die getrocknete feste Trägermasse und/oder Mischen der getrockneten festen Masse mit ein oder mehreren festen Detergens-Komponenten.

2. Verfahren nach Anspruch 1, worin die Lösung eine konzentrierte Lösung mit weniger als 35% Feststoffen ist.

3. Modifizierte Natriumcarbonat-Trägermasse, umfassend:
a) trockene anorganische Feststoffe, bestehend aus Kristallhabitus-modifiziertem Natriumcarbonat; und
b) Polyasparginsäure oder ein Natriumsalz von Polyasparaginsäure,
wobei das Gewichtsverhältnis von Polyasparaginsäure zu den trockenen anorganischen Feststoffen in dem Verhältnis von 0,5 : 100 bis 10 : 100 liegt.

4. Trägermasse nach Anspruch 3, worin das Verhältnis 1:100 bis 5:100 beträgt.

5. Trägermasse nach Anspruch 3 oder 4, in dem das Verhältnis 1:100 bis 3:100 beträgt.

6. Trägermasse nach einem der Ansprüche 3 bis 5, in der das Molekulargewicht der Polyasparaginsäure größer als 4.000 ist.

7. Trägermasse nach einem der Ansprüche 3 bis 6, die im Wesentlichen frei von Natriumsulfat ist.

8. Beladener Träger, umfassend eine Trägermasse nach einem der Ansprüche 3 bis 7, in der 5 bis 40 Gew.-% einer Flüssigkeit adsorbiert sind.

9. Trägermasse nach einem der Ansprüche 3 bis 7, hergestellt nach einem Verfahren des Anspruchs 1 oder 2.

10. Beladener Träger nach Anspruch 8, in dem die Flüssigkeit ein nicht-ionisches Tensid oder die Paste eines anionischen Tensids ist.

11. Verwendung des beladenen Trägers nach Anspruch 10 in einer Waschdetergens-Formulierung.

12. Verwendung nach Anspruch 11, wobei die Waschdetergens-Formulierung eine Pulverzusammensetzung darstellt.

13. Verwendung nach Anspruch 11, in der die Waschdetergens-Formulierung eine Tablette darstellt.

## Revendications

1. Procédé de préparation d'un matériau support à base de carbonate de sodium modifié, le procédé comprenant les étapes de :
(i) préparer une solution aqueuse de carbonate de sodium ; une quantité efficace d'un modificateur de cristallogénèse choisi dans le groupe comprenant les polyacrylates, les polyaspartates et les acides polyaspartiques ; et éventuellement un ou plusieurs composés actifs en tant que détergent anioniques et / ou non ioniques, un ou plusieurs adjuvants de détergence et / ou un ou plusieurs autres composants détergents insensibles à la chaleur ; où une suspension n'est pas formée et où un carbonate de sodium modifié par cristallogénèse est formé ;
(ii) sécher la solution pour former un matériau support solide sec ;
(iii) facultativement incorporer dans le matériau support solide séché un ou plusieurs composants détergents sous une forme liquide et/ou mélanger le matériau solide séché avec un ou plusieurs composants détergents solides.

2. Procédé selon la revendication 1, dans lequel la solution est une solution concentrée avec moins de 35 % de solides.

3. Matériau support à base de carbonate de sodium modifié comprenant :
a) des solides inorganiques secs consistant en un carbonate de sodium modifié habituel ; et
b) un acide polyaspartique, ou un sel sodique d'acide polyaspartique,
dans lequel le rapport en poids de l'acide polyaspartique aux solides inorganiques secs est dans la plage de 0,5/100 à 10/100.

4. Matériau support selon la revendication 3, dans lequel le rapport est de 1/100 à 5/100.

5. Matériau support selon la revendication 3 ou la revendication 4, dans lequel le rapport est de 1/100 à 3/100.

6. Matériau support selon l'une quelconque des revendications 3 à 5, dans lequel le poids moléculaire de l'acide polyaspartique est supérieur à 4000.

7. Matériau support selon l'une quelconque des revendications 3 à 6, qui est sensiblement exempt de sulfate de sodium.

8. Support chargé comprenant un matériau support selon l'une quelconque des revendications 3 à 7, dans lequel 5 à 40 % en poids d'un liquide sont absorbés.

9. Matériau support selon l'une quelconque des revendications 3 à 7, préparé selon le procédé de la revendication 1 ou de la revendication 2.

10. Support chargé selon la revendication 8, dans lequel le liquide est une pâte de tensioactif non ionique ou de tensioactif anionique.

11. Utilisation du support chargé selon la revendication 10 dans une formulation pour lessive.

12. Utilisation selon la revendication 11, dans laquelle la formulation pour lessive est une composition en poudre.

13. Utilisation selon la revendication 11, dans laquelle la formulation pour lessive est une tablette.
